**Europäisches Patentamt**

**European Patent Office**

**Office européen des brevets**

(19)

(11) Veröffentlichungsnummer : **0 417 163 B1**

(12) # EUROPÄISCHE PATENTSCHRIFT

(45) Veröffentlichungstag der Patentschrift :
**13.05.92 Patentblatt 92/20**

(51) Int. Cl.$^5$ : **G06F 1/00**

(21) Anmeldenummer : **89906327.5**

(22) Anmeldetag : **23.05.89**

(86) Internationale Anmeldenummer :
**PCT/DE89/00334**

(87) Internationale Veröffentlichungsnummer :
**WO 89/11692 30.11.89 Gazette 89/28**

(54) **FUNKTIONERWEITERUNGSEINRICHTUNG FÜR EINEN PC.**

(30) Priorität : **24.05.88 DE 3818025**

(43) Veröffentlichungstag der Anmeldung :
**20.03.91 Patentblatt 91/12**

(45) Bekanntmachung des Hinweises auf die
Patenterteilung :
**13.05.92 Patentblatt 92/20**

(84) Benannte Vertragsstaaten :
**DE FR GB IT SE**

(56) Entgegenhaltungen :
**GB-A- 2 143 117**
**US-A- 4 479 198**
**IBM Rechnical Disclosure Bulletin, volume 28,**
**No. 7, December 1985 (New York,US),**
**"Industriel personal computer for class " C"**
**industriel environment", pages 2785-2798,**
**see figures 1,2,4A,9A; page 2787, lines 2-5.**

(73) Patentinhaber : **ZHU, Ming**
**Werftstrasse 5a**
**W-1000 Berlin 21 (DE)**
Patentinhaber : **BAO, Yongijan**
**Werftstrasse 5a**
**W-1000 Berlin 21 (DE)**
Patentinhaber : **WANG, Dongyu**
**Werftstrasse 5a**
**W-1000 Berlin 21 (DE)**

(72) Erfinder : **ZHU, Ming**
**Werftstrasse 5a**
**W-1000 Berlin 21 (DE)**
Erfinder : **BAO, Yongijan**
**Werftstrasse 5a**
**W-1000 Berlin 21 (DE)**
Erfinder : **WANG, Dongyu**
**Werftstrasse 5a**
**W-1000 Berlin 21 (DE)**

(74) Vertreter : **Christiansen, Henning, Dipl.-Ing.**
**Patentanwalt CHRISTIANSEN Pacelliallee**
**43/45**
**W-1000 Berlin 33 (DE)**

EP 0 417 163 B1

## Beschreibung

Die Erfindung betrifft eine Funktionerweiterungseinrichtung der im Oberbegriff des Anspruchs 1 angegebenen Art.

Es ist bekannt, zur Heraufsetzung der Leistungsfähigkeit eines PC Erweiterungskarten mit vollständigem PC-Bus-Anschluß zu verwenden, die in den Erweiterungssteckplätzen auf der Hauptplatine von dem PC eingesteckt werden können. Durch Einstecken verschiedener Erweiterungskarten läßt sich die Leistung eine PC erheblich erhöhen. Beispielsweise sind alle Graphik-Karten als Erweiterungskarten ausgebildet, wovon viele sehr leistungsfähig sind. Durch Ausstattung mit Erweiterungskarten kann ein PC nahezu unbegrenzte Aufgaben übernehmen, die er ohne diese Zusätze überhaupt nicht oder nur sehr langsam ausführen könnte.

Nachteilig ist dabei,

1. daß die Anzahl der Erweiterungssteckplätze beschränkt ist (Normalerweise stehen nur acht Erweiterungssteckplätze in einem PC zur Verfügung. Bei umfangreichem Ausbau mit Erweiterungskarten wird Platz der Erweiterungssteckplätze leicht knapp.),

2. daß zum Einstecken einer neuen Erweiterungskarte das Gehäuse des Rechners stets mittels Werkzeugen zu öffnen ist (Dazu muß die Stromversorgung unterbrochen werden, so daß alle Programme neu geladen werden müssen. Wegen der knappen Zahl von Erweiterungssteckplätzen kann das Öffnen bei vielfältig wechselnden Aufgaben sehr häufig erforderlich sein. Die regelmäßigen Arbeitsunterbrechungen sind für den Benutzer sehr unangenehm.)

3. daß für bestimmte Anwendungen die Kapazität der Standard-Erweiterungskarten nicht ausreichend ist (Leistungsfähigere Standardkarten lassen sich nur unter großem Aufwand entwickeln. Es wurde beispielsweise versucht, zwei Platinen aufeinanderzustapeln und gemeinsam als eine einzige Standard-Erweiterungskarte im PC einzusetzen. Wegen des festen Abstandes zwischen zwei Erweiterungssteckplätzen ist die maximale Dicke der Erweiterungskarten jedoch unüberwindbar begrenzt und

4. daß die Lebensdauer der Erweiterungskarten durch häufiges Wechseln beeinträchtigt wird.

Der Erfindung liegt die Aufgabe zugrunde, bei einer Funktionerweiterungseinrichtung der eingangs genannten Gattung die Möglichkeit zu schaffen, beliebige Erweiterungen in beliebiger Folge ohne wesentliche Aufwand benutzen und wechseln zu können.

Diese Aufgabe wird mit den kennzeichnenden Merkmalen des Anspruchs 1 gelöst.

Besonders vorteilhaft bei der Erfindung ist, daß sich die modulare Funktionerweiterungseinrichtung für PCs, bestehend aus einem Einbaukasten und den einschiebbaren Erweiterungsboxen, deren äußere Maße dem eines Standard-Floppy-Laufwerk entsprechen, entsprechend einem Floppy-Laufwerk in den PC in der entsprechenden Position eingebaut werden kann und damit die Funktion eines Erweiterungssteckplatzes auf der PC-Hauptplatine voll übernimmt. Die Erweiterungskarten werden damit nicht mehr ohne Gehäuse verwendet, sondern sind in einer verschlossenen Box geschützt. Die in den Einbaukasten einschiebbare Box ist mit einer PC-Bussteckerleiste in der rückwärtigen Blende versehen und wird hier als einschiebbare Erweiterungsbox bezeichnet.

Die Erweiterungsboxen sind in den Einbaukasten rastend einschiebbar. Zur Erleichterung des Rastvorganges und zur Gewährleistung einer sicheren elektrischen verbindung zwischen der Erweiterungsbox und dem Einbaukasten sind die Kontaktbolzen des PC-Bus-Kontaktsteckers vorzugsweise mit einer Federung versehen.

Die einschiebbaren Erweiterungsboxen können zum großen Teil die heutigen Erweiterungskarten ersetzen. Die in begrenzter Anzahl zur verfügung stehenden Erweiterungssteckplätze im PC können dann zur Funktionerweiterung für wesentliche Funktionen verwendet werden, die bei allen Betriebsarten verwendet werden und für die Grundkonfiguration des Gerätes nötig sind, wie z.B. Graphikkarten, Speichererweiterungen, lokale Netzwerk-Schnittstellen. Die entsprechenden Erweiterungskarten lassen sich in diese Steckplätze (normalerweise gibt es acht solcher Plätze in einem PC) einstecken. Sie sind nie oder nur selten zu wechseln. Zahlreiche verschiedene spezifische Funktionserweiterungen aber können durch entsprechende einschiebbare Erweiterungsboxen unterstützt werden. Damit wird kein Erweiterungssteckplatz auf der Hauptplatine des PC benötigt und es ist kein Öffnen des Gehäuses des Rechners erforderlich. Der Einbaukasten wird hinter der Frontblende eingebaut, deshalb können verschiedene Erweiterungsboxen als "Funktionsboxen" entsprechend Disketten nacheinander benutzt werden.

Analog zu in der PC-Hauptplatine vorgesehen Erweiterungssteckplätzen kann jeder Erweiterungskasten als ein Steckplatz verwendet werden. Besonders vorteilhaft dabei ist, daß die Öffnung, d.h. die Zugangsöffnung des "Steckplatzes" entsprechend der Zugangsöffnung eines Floppylaufwerks an der Frontblende des PC vorgesehen ist und somit Funktionerweiterungensboxen, d.h. Erweiterungskarten, wie Disketten häufig nach Bedarf im PC gewechselt werden können.

Folgendes Beispiel soll zur Erläuterung dienen: Wenn beispielsweise ein Programm mit IBM-Color-Graphikkarte im PC gelaufen ist und jetzt ein anderes Programm mit Hercules-Graphikkarte benutzt werden soll, so ist lediglich die Erweiterungsbox zu wechseln, wobei weder der PC auszuschalten noch vom Stromnetz zu trennen oder zu öffnen ist.

Die hinter der Frontblende des PC montierte Funktionerweiterungseinrichtung für einen Standard-PC-Bus-Anschluß ist für alle IBM PC/XT, /AT, PS/2 sowie Kompatible geeignet.

Die Funktionerweiterungsbox mit zu einem oder mehreren verschiedenen Zwecken vorgesehenen darin enthaltenen Erweiterungskarten bilden ein geschlossenes Gehäuse, dessen äußeres Maß an den Erweiterungskasten angepaßt ist, das in seinen Außenmaßen entsprechend dem Standard-$5\frac{1}{4}$"- oder $3\frac{1}{2}$"-Floppy-Laufwerk ausgebildet und in der entsprechenden Stelle in den PC eingebaut werden kann.

Die verschiedenen Funktionerweiterungsboxen können online oder off-line in den Erweiterungskasten des PC nach Wunsch eingesetzt oder herausgenommen werden.

Die BUS-Verbindung zwischen PC und eingesetzter Erweiterungsbox ist bevorzugt über einen in der Box eingesetzten steuerbaren Puffer mit Tri-State-Ausgängen schaltbar.

Die Funktionerweiterung des PC kann damit einerseits die Erweiterung des vollen PC-Buses unterstützen, damit umfangreiche Aufgaben ohne Beschränkungen durch entsprechende Erweiterungskarte realisiert werden können, und andererseits zusätzliche Flexibilität und Benutzerfreundlichkeit bieten.

Die einschiebbare Erweiterungsbox ist eine verschlossene Box, in dem eine oder mehrere Erweiterungskarten eingebaut werden können. Umfangreiche Erweiterungskarten können in verschiedenen Boxen eingesetzt werden. Statt verschiedene Erweiterungskarten in die Erweiterungssteckplätze einzustecken, kann ein Benutzer zahlreiche verschiedene Funktionserweiterungsboxen besitzen und sie nach Bedarf in den im PC eingebauten Erweiterungskasten einsetzen.

Die Frontblende der Box läßt sich vom Benutzer frei definieren. Man kann z.B. benötigte Kabelsteckdosen, LED-Anzeiger, Zähler oder Schalter an der Frontblende vorsehen. Diese Frontblende kann dabei als ein frei belegbares Gerätepaneel benutzt werden. Dadurch lassen sich die Funktionserweiterungskarten genau wie ein Meßgerät oder eine sonstige elektrische Funktionsgruppe auslegen, wobei sämtliche externen Anschlüsse für den jeweiligen Anwendungszweck in der Frontplatte der Box vorgesehen werden, während die für die jeweilige Funktion notwendigen Rechenoperationen im PC ausgeführt werden. Damit lassen sich technische Lösungen realisieren, die unter den Begriff "Virtual Instrumentation" fallen.

Bei der modularen Erweiterungseinrichtung können Funktionserweiterungsboxen, d.h. Geräte, nach Bedarf beliebige Bedienungs-Frontflächen aufweisen und damit dem Benutzer mehr Möglichkeiten anbieten. Entsprechendes konnte mit der konventionellen Technik der Funktionerweiterung für PCs, d.h. den in Erweiterungssteckplätzen eingesetzten Erweiterungskarten, kaum realisiert werden.

Die einschiebbare Erweiterungsbox bildet einen verschlossenen Kasten, in den eine oder mehrere Erweiterungskarten eingebaut werden können. Umfangreiche Erweiterungskarten können in mehrere getrennte Boxen eingesetzt werden. Statt verschiedene Erweiterungskarten in die Erweiterungssteckplätze einzustecken, kann ein Benutzer auch zahlreiche verschiedene Funktionerweiterungsboxen besitzen und sie nach Bedarf abwechselnd in den im PC eingebauten Erweiterungskasten einlegen. Bei der modularen Erweiterungseinrichtung benutzt der Benutzer die verschiedenen Boxen, nämlich verschiedene Erweiterungskarten, somit als "dickere Diskette".

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren naher dargestellt. Es zeigen:

Figur 1 ein Ausführungsbeispiel eines PC in '386-Konfiguration mit einem Einbaukasten,

Figur 2 ein Ausführungsbeispiel eines PC in AT-Konfiguration,

Figuren 3a bis c drei Ausführungsbeispiele von Erweiterungsboxen,

Figur 4 einschiebbare Erweiterungsbox vor dem Einbaukasten,

Figur 4a die Erweiterungsbox in der Ansicht perspektivisch von unten,

Figuren 5a bis d das Auführungsbeispiel der Erweiterungsbox in Ansichten von drei Seiten,

Figuren 6a bis c Details der Steckleiste des Erweiterungskastens und der beweglichen Steckeraufnahme,

Figuren 7a bis e die Erweiterungsbox beim Einschieben bzw Herausnehmen aus dem Einbaukasten,

Figuren 8a bis e Details der Verriegelungsmechanik in Funktion korrespondierend zu den Figuren 7a bis e,

Figuren 9 sowie 10a und b weitere Details der Verriegelungsmechanik,

Figur 11 eine Elektronikschaltung zur Realisierung einer Sicherheitsfunktion in Verbindung mit dem bevorzugten Ausführungsbeispiel der Erfindung,

Figur 12 eine Prinzipdarstellung der Bestückung einer Erweiterungsbox mit PC-Erweiterungskarten,

Figur 13 eine Ausführung eines PC-Buskontaktes zwischen einem Einbaukasten und einer Erweiterungsbox einschließlich vergrößerter Detaildarstellungen sowie

EP 0 417 163 B1

Figur 14 eine Montagezeichnung eines Kontaktbolzens eines PC-Bus-Kontaktsteckers gemäß Figur 13.

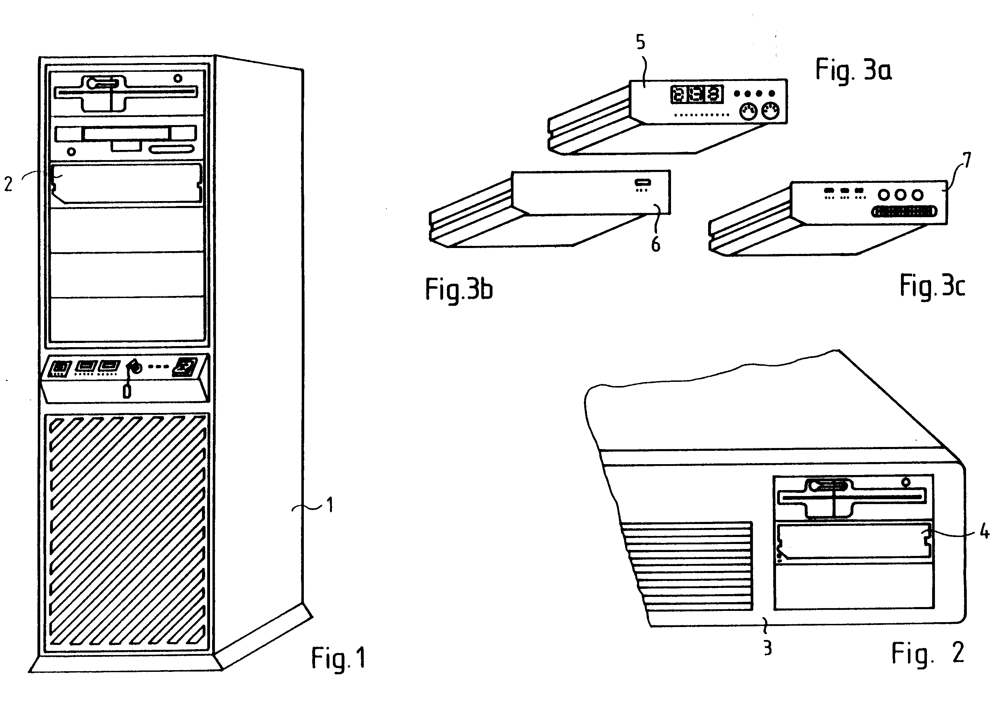

Bei dem in Figur 1 dargestellten Ausführungsbeispiel eines PC in '386-Konfiguration 1 mit einem Einbaukasten 2, sowie einem in Figur 2 wiedergegebenen Ausführungsbeispiel eines PC in AT-Konfiguration 3 mit einem Einbaukasten 4 sowie den in den Figuren 3a bis c dargestellten Ausführungsbeispielen von Erweiterungsboxen 5 bis 7 ist erkennbar, daß die modulare Erweiterungseinrichtung aus zwei Teilen besteht: dem im Computer befindlichen Einbaukasten und der einschiebbaren Erweiterungsbox.

Die äußeren Maße des Einbaukastens entsprechen denjenigen eines Standard-Floppylaufwerks und er läßt sich wie ein Floppylaufwerk in derselben Lage des PC einsetzen.

Deshalb kann unter mechanischen Aspekten der Einbaukasten als Ersatz des Standard-Floppylaufwerks betrachtet werden, d.h. in den bislang nur für das Standard-Floppylaufwerk vorgesehenen Positionen können statt Floppylaufwerken ohne Schwierigkeiten auch Kästen der Erweiterungseinrichtung eingesetzt werden.

Die Darstellungen gemäß den Figuren 3a bis c zeigen, daß die Erweiterungsbox für die verschiedensten Zwecke geschaffen sein kann: beispielsweise als Eingangsteil für eine Meßvorrichtung mit zusätzlicher Digitalanzeige, wie in Figur 3a, als Speichererweiterung wie in Figur 3b oder als Interface zu weiteren externen Einrichtungen mit einer Kontaktleiste versehen, wie es in Figur 3c dargestellt ist.

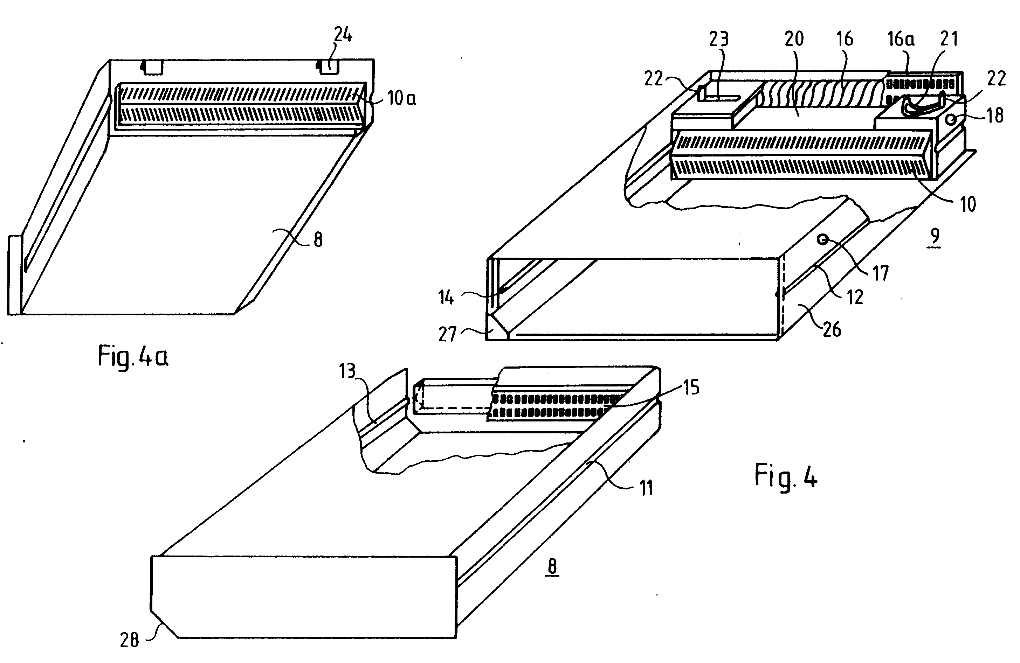

In Figur 4 ist eine Erweiterungsbox 8 in der Position zum Einschieben in den Einbaukasten 9 perspektivisch dargestellt. (In Figur 4a ist die Erweiterungsbox 8 noch einmal in ihrer Ansicht schräg von unten mit Blick auf ihren rückwärtigen Teil dargestellt.) Der Einbaukasten 9 ist zu einem Ende hin offen und ist am anderen Ende mit einem durch Federn verschiebbar abgestützten PC-Busanschluß 10 ausgestattet.

Die Box ist an der Rückseite, die im übrigen mit einer Rückblende abgeschlossen ist, mit einem zum Busanschluß 10 des Kastens passenden Steckverbinder 10a ausgestattet, dessen Anschlüsse in der Form einer konvexen winkelförmigen Anordnung vorgesehen sind. Der Steckverbinder bildet eine sich quer über die rückwärtige Fläche in ihrer maximalen Ausdehnung erstreckende satteldachartige Struktur, wobei die beiden "Dachflächen" jeweils Kontaktflächen tragen. Der Busanschluß 10 des Kastens ist entsprechend konkav ausgebildet und weist die Kontaktelemente entgegengesetzter Konfiguration (männlich bzw. weiblich) auf. Durch die dachförmige Struktur wirken die Kontakte selbstzentrierend und führen zu einem sicheren Halt und guter gegenseitiger Kontaktgabe.

Der mit Federn abgestützte Busanschluß 10 sorgt in Verbindung mit einer an der Rückseite der Erweiterungsbox vorgesehenen Kontaktleiste 10a für die vollständige Busverbindung zwischen dem Einbaukasten und einer in der Box eingebauten (nicht dargestellten) Erweiterungskarte. In der Box können eine, zwei oder sogar drei Erweitungskarten vorgesehen sein. Innerhalb der Box ist zum Anschluß der Erweiterungskarte(n) ein entsprechender Steckverbinder 15 vorgesehen, dessen Anschlüsse zum äußeren Steckverbinder 10a durchverbunden sind.

Der Einbaukasten ist durch eine flexible Bus-Leitung 16 mit einem Steckverbinder 16a elektrisch mit dem PC verbunden. Die Anschlüsse umfassen ebenfalls die volle Busbreite des Grundsystems.

Die einschiebbare Erweiterungsbox 8 kann durch die Frontöffnung des Einbaukastens mittels jeweils zwei an den Wänden eingelassener Schiebebahnen 12 und 14 in den Einbaukasten 9 eingeschoben werden. In den beiden Seitenflächen der Box sind dabei jeweils zwei als Sicken in die betreffenden Blechteile eingeformte konkave Schiebebahnen 11 und 13 als Führungen eingelassen, welche den beiden entsprechenden konvexen Führungen 12 und 14 des Kastens entsprechend angepaßt ausgebildet sind.

Zwei Schrauböffnungen 17 und 18 ermöglichen zusammen mit entsprechenden auf der Gegenseite angebrachten (und in der Zeichnung nicht sichtbaren) Schrauböffnungen die Befestigung in den entsprechenden Schächten für Floppy-Diskstationen oder Festplatten. Der Einbaukasten wird im PC in einer für Standard-Floppylaufwerke vorgesehenen Position eingesetzt, wie es in den Figuren 1 und 2 dargestellt ist. Durch die in der rückwärtigen Blende vorgesehene PC-Bus-Steckdose ist der Erweiterungskasten mit dem PC verbindbar.

In Figur 4 ist erkennbar, daß der Busanschluß an einem in Einschubrichtung der Box 8 verschiebbaren Block 20 vorgesehen ist. Zwei an dem Block 20 fest angebrachte, Steuerkurven bildende Führungen 21 (in der Figur rechts durch Freischneiden erkennbar) treten mittels beweglicher Führungsstifte 22, die in mit dem Kasten 9 fest verbundenen linearen Führungen 23 in Querrichtung beweglich sind, in Wechselwirkung (in der Figur links erkennbar). Die Führungen 21 und 23 bilden zusammen mit dem Stiften 22 eine Druckmechanik, die nach einem Druck jeweils abwechselnd in zwei unterschiedlichen Positionen rastet. Diese beiden Positionen sind zum einen die Betriebsstellung der Box und zum anderen eine Entnahmeposition der Box, in der sie um einen Längenbetrag aus der vorderen Öffnung des Kastens herausragt und somit leicht entnommen werden kann. Die Mechanikelemente unds die Führungen der Druckmechanik sind in ihrer Funktion und Wirkung mit denjenigen der Druckmechanik eines Kugelschreibers vergleichbar. Bei der dargestellten Lösung dient allerdings die gesamte Frontfläche der Box als "Druckfläche", wobei die Box in der vorderen Stellung des Blocks 20 frei entnommen bzw. eingesetzt oder ersetzt werden kann. Dazu ist neben der in Einschubrichtung der Box verschiebbaren Positionierung auch noch eine Verriegelung der Box in der eingeschobenen Position vorge-

<div align="center">4</div>

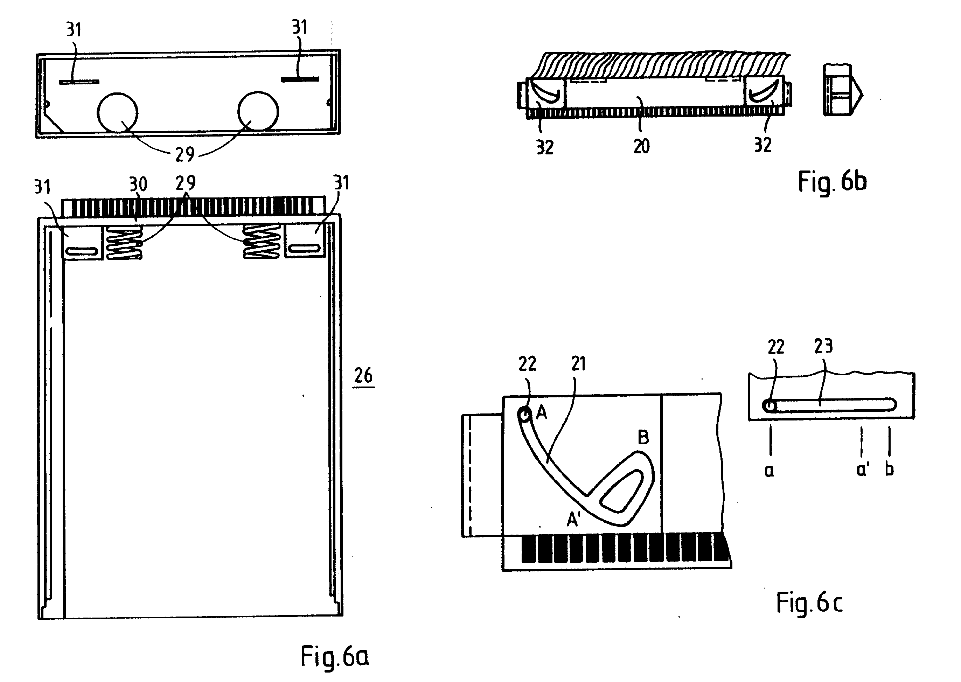

sehen. Die für diese Funktion notwendigen Federelemente, welche entgegengesetzt zur Einschubrichtung wirken, sind in Figur 6 erkennbar. Einzelheiten dazu werden weiter unten näher beschrieben.

In Figur 4a sind Verriegelungselemente als Winkelanschläge 24 vorgesehen, welche von den nach oben gerichteten freien Enden der Stifte 22 (Figur 4), die gleichzeitig als Verriegelungsbolzen wirken, hintergriffen werden. Diese befinden sich in der Darstellung gemäß Figur 4 in ihrer äußeren (Freigabe-)stellung und werden nach innen bewegt, um die Box zu arretieren, indem sie die Winkelanschläge 24 hintergreifen.

In Figur 4 ist ferner ersichtlich, daß der einen Rahmenteil 26 bildende Teil des Kastens einen unsymmetrischen Bereich 27 aufweist, der im Zusammenwirken mit einem entsprechenden Bereich 28 der Box ein Einschieben der Box in einer anderen als der vorgegebenen Stellung verhindert. Der unsymmetrische Bereich hat in der frontalen Draufsicht die Gestalt einer "abgeschnittenen Ecke", bezogen auf die Box. Er setzt sich über den gesamten Bereich der entsprechenden Kante der quaderförmigen Box fort, die insoweit über ihre gesamte Länge einen einheitlichen querschnitt aufweist.

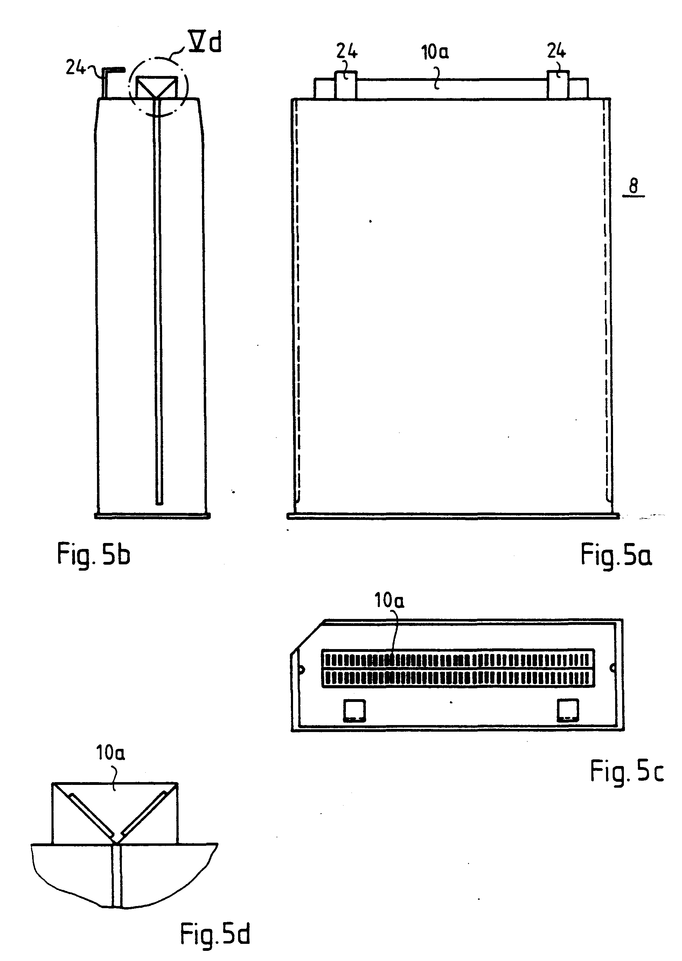

In den Figuren 5a bis d ist die Erweiterungsbox noch einmal in ihren drei Seitenansichten wiedergegeben, wobei Figur 5d eine vergrößerte Darstellung des Verbinderteils 10a der Box 8 gibt.

Die technischen Detailzeichnungen des Erweiterungskastens sind in Figur 6 dargestellt. Er besteht aus drei Teilen: einem festen Rahmenteil 26 (Figur 6a in Frontansicht und Draufsicht), einem beweglichen Block 20 mit Busanschluß (in Figur 6b in Seitenansicht und Draufsicht aus dem Rahmenteil herausgenommen dargestellt und den auf den Busanschluß gebauten Sperrungen. Der Festteil bildet eine Stützstruktur des Kastens. Seine äußeren Maße sind nach denjenigen eines Standard-Floppylaufwerks gestaltet. Der Rahmen entspricht unmittelbar einem Montagegestell eines Floppylaufwerks, deshalb kann der Kasten wie ein Floppylaufwerk in derselben Lage auf PC eingesetzt werden.

In Figur 6a sind in der Draufsicht zwei Federn 29 dargestellt, die durch Entfernen des Blocks 20 sichtbar sind. Die Federn stützen sich an einer rückwärtigen Blende 30 ab.

Der Rahmen 26 ist in Fig. 6a dargestellt. Der Busanschluß und die Basis der Sperrung sind in Fig. 6b dargestellt. Der Busanschluß ist wie die Erweiterungsbox in Schiebebahnen montiert und durch zwei Federn unterstützt. Durch eine flexible Busleitung läßt sich dieser Busanschluß mit der auf Rückblende gebauten Bussteckdose verbinden und in den Schiebebahnen bewegen.

In Blechwinkeln 31 und Führungselementen 32 sind zwei Steuerkurven 21 bzw. 23 für die Verriegelungsbolzen 22 vorgesehen. In Fig. 6c ist dargestellt, daß zwei Führungen einen kompletten mechanischen Zyklus ermöglichen: Von der arretierten Position A der Box zur Freigabe-Position B und dann von B nach A zurück.

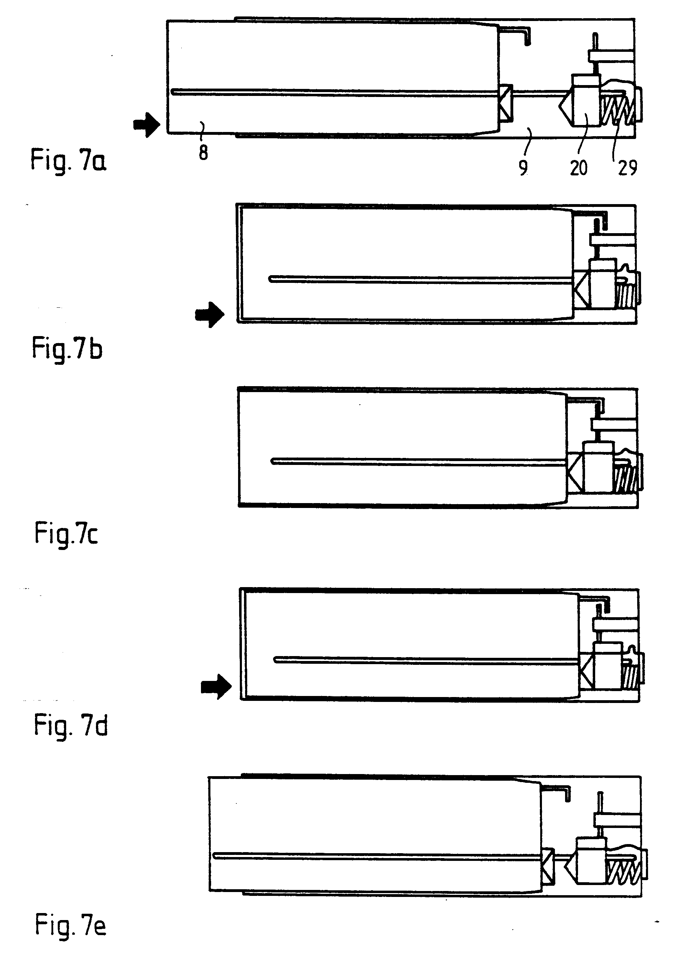

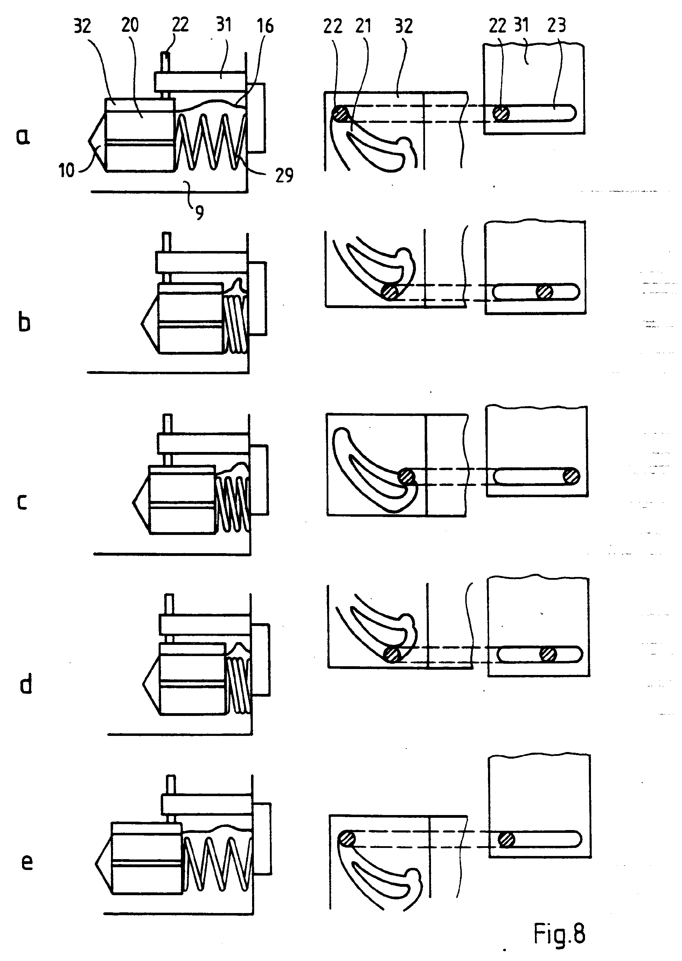

In den Figuren 7a bis 7e sind die einzelnen Stufen es Einschub- oder Wechselvorgangs einer Box näher dargestellt. Die Figuren 8a bis 8e zeigen korrespondierend dazu die Positionen des Blocks 20 (vergrößert) und der Führungen 21 und 23 mit den Stiften 22.

Zur Benutzung legt die Bedienungsperson eine einschiebbare Erweiterungsbox in den Kasten ein (Figur 7a) und verschiebt diese entlang der Gleitbahnen nach innen bis zum Ende des Einbaukastens (Figur 7b). Dann wird die Box durch zwei im Einbaukasten eingebaute Federn in einem bestimmten Abstand nach außen zurückgestoßen und in der vorgesehenen Lage durch zwei Sperrungen blockiert, in der die Frontblende der Box mit dem PC gerichtet wird (Figur 7c). Durch den engen Kontakt zwischen der Bus-Steckdose der Box und dem Busanschluß des Einbaukastens (s. Figur 7c) wird der sichere Kontakt der Erweiterungseinheit an den PC-Bus sichergestellt. Nach der Benutzung wird die Box wieder ein wenig vorwärts (in den Kasten hinein) geschoben (Figur 7d) und somit freigegeben. Infolge der Auflösung der Sperrungen wird die Box durch die Feder nach außen gestoßen (Figur 7e). Danach kann der Benutzer die Box herausnehmen und nach Bedarf eine andere einschiebbare Erweiterungsbox einlegen.

In den Figuren 7 und 8 sind die Relativbewegungen von Box 8 und Kasten 9 in Seitenansicht dargestellt. Es bewegt sich der Verriegelungssbolzen 22 relativ zur Basis in einer Führungsnut. Wegen der an dem Kasten befestigten Führung kann der Verriegelungsbolzen relativ zum Kasten in y-Richtung nicht bewegt werden. Folglich wird der Bus-Anschluß in dem Punkt B positioniert und dadurch blockiert. Der Verriegelungsbolzen übernimmt die x-Komponente der Bewegung und bewegt sich entlang der Führungsbahn von a nach b. In der Position b sperrt der Bolzen den Kasten. Um die Box herauszunehmen, wird sie noch einmal in Richtung nach innen verschoben, dann läßt sich der Busanschluß in y-Richtung stoßen. Durch die auf Basis eingelassenen Graben und die Führung verschiebt sich der Verriegelungsbolzen vom Punkt b zurück nach a. Zur Aufhebung der Sperrung wird die Box durch die beiden Federn nach außen gestoßen.

Die drei Punkte A, A' und B eingelassenen Führungsnut 21 - entsprechend gibt es drei Positionen des Verriegelungsbolzens 22 in den Führungen a, a' und b - beschreiben die drei mechanischen Zustände der modularen Funktionerweiterungseinrichtung: Freigabe der Box, tiefstes Einschieben der Box und Sperrung der Box.

Der elektrische Buskontakt zwischen der Box und dem Busanschluß bzw. dem PC wird durch die beiden Federn garantiert. Der Kontaktdruck kann durch Auswahl der Federn präzise bestimmt werden.

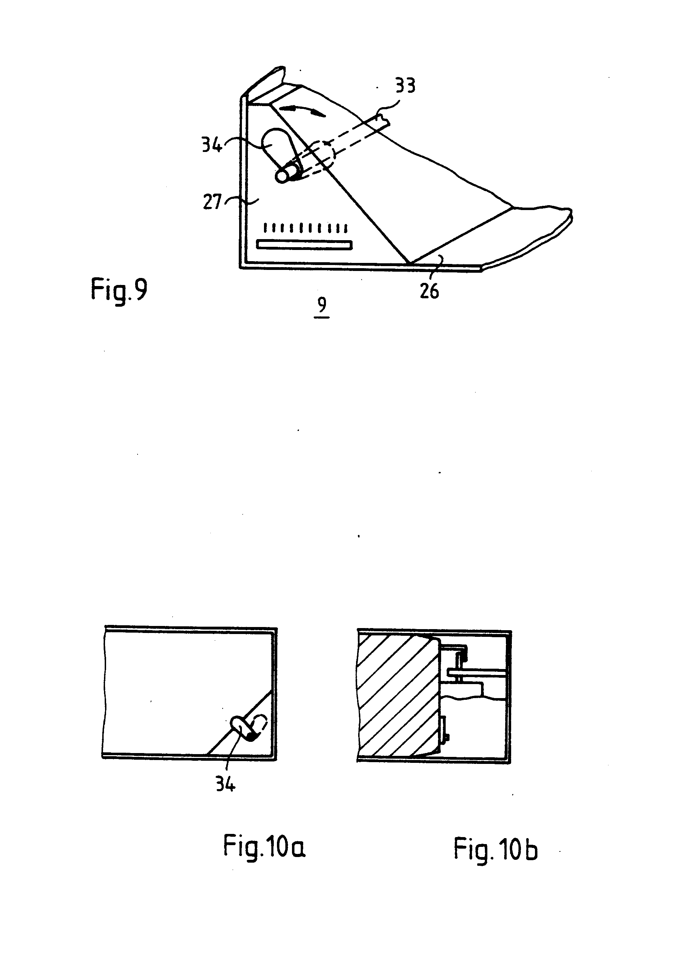

Außer dieser Sperrung ist zusätzlich eine Sperrung in der unteren linken Ecke des Rahmens 26 des Kastens 9 vorgesehen, um die Box 8 bei der Bearbeitung in beiden y-Richtungen zu sperren. Diese Sperrung wird mit Sperrung 2 ($S_2$) und die zuvor beschriebene mit Arretierung mit Sperrung 1 ($S_1$) bezeichnet. Wie in Figur 9 dargestellt ist, besteht die Sperrung 2 aus einem im Bereich 27 angebrachten, um eine Achse 33 schwenkbaren Hebel. 34. Die Achse 31 ist mit einem weiteren Hebel 35 verbunden, der die Box 8 im Bereich ihrer Rückwand beim Einschwenken hintergreift (Figuren 10a und 10b). Es ist ersichtlich, daß durch einen äußerst einfachen Mechanismus eine vollständige Arretierung der Box möglich ist. Die Position des Hebels 34 an der Frontfläche macht den jeweiligen Zustand (freigegeben oder arretiert) sinnfällig sichtbar.

Nach Einlegen einer Box in den Erweiterungskasten wird sie durch die Sperrung 1 in der definierten Arbeitsposition blockiert. Die Box kann aber noch nach innen verschoben werden, um die Sperrung 1 aufzulösen. Die Sperrung 2 soll die Box bei der Bearbeitung auch in die y-Richtung nach innen sperren und ist in der unteren linken Ecke des Kastens vorgesehen, wie in Figuren 10a und b gezeigt ist. Damit ist die Box bei Bearbeitung in beide y-Richtungen gesperrt und kann sich nicht bewegen. Die Box ist sicher gehalten, so daß auch Kabel an der Frontblende der Box eingesteckt oder gewechselt werden können.

Nach Schluß der Benutzung wird die Sperrung 2 zunächst durch Drehen gelöst werden und anschließend kann die Box in y-Richtung nach innen gestoßen werden, um die Sperrung 1 aufzuheben.

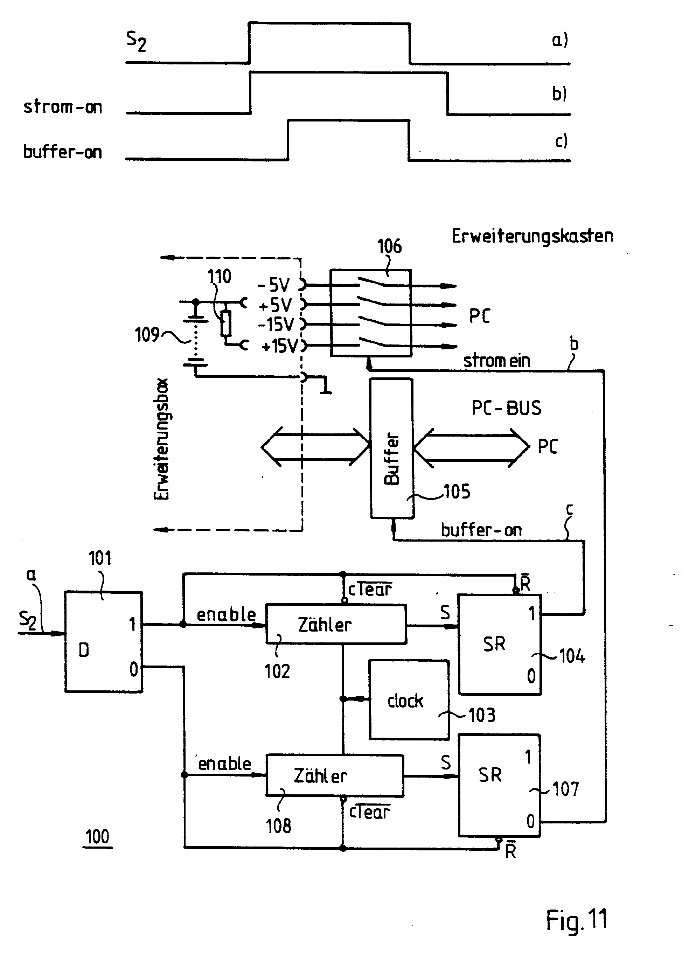

Die in Figur 11 dargestellte Sicherheitsschaltung 100 dient zur Sicherung der Daten bzw. der Datenverarbeitung und der dabei erzielten Ergebnisse beim Einfügen und bei der Entnahme der erfindungsgemäßen Datenbox. Um sicherzustellen, daß vor Aufnahme der Datenverarbeitung bzw. der entsprechenden Funktion nach Einschieben der Datenbox die Spannungen der Stromversorgung ausreichend zur Verfügung stehen bzw. vor der Entnahme der Box die Verarbeitung zunächst abgeschlossen werden kann, ist die dargestellte Schaltung vorgesehen. Wenn das zweite Sperrelement $S_2$ in den Sperrzustand gesetzt wird, so befindet sich aufgrund des entsprechenden Eingangssignals ein Latch 101 im gesetzten Zustand, so daß der Ausgang 1 ein "High"-Signal abgibt. Damit die Schaltung in der Box ihren Betrieb ordnungsgemäß aufnehmen kann, wird zunächst ein Zähler 102 über seinen "Enable"-Eingang aktiviert. Durch die von einem Taktgenerator 103 abgegebenen Impulse wird der Zähler bis zu einem vorgegebenen Zählwert vorangesetzt. Dieser Zählwert S setzt ein Latch 104, dessen Ausgangssignal "1" eine Pufferschaltung 105 aktiviert. Das Einschaltsignal, verzögert die Aktivierung der Pufferschaltung 105 um einen vorgegebenen Zeitraum gegenüber dem Einschalten der Stromversorgung über eine Schaltergruppe 106, welcher dem Produkt aus der Taktfrequenz des Taktgenerators 103 und dem vorgegebenen Zählerstand S entspricht.

Die Schaltergruppe 106 wurde bereits unmittelbar mit dem Einsetzen der Erweiterungsbox eingeschaltet, und zwar gelangt ein Latch 107 bereits unmittelbar nach dem Einschalten in den nicht gesetzten Zustand, wodurch das Ausgangssignal "0" die Schalter 106 eingeschaltet hält.

Bei Entsperrung des zweiten Sperrelements, d.h. bei Beendigung des Betriebs der Einschubbox, gelangt das Latch 101 in einen Zustand, bei dem der Ausgang "0" ein "High"-Signal abgibt. Damit wird der Enableeingang eines Zählers 108 aktiviert, der entsprechend dem Zähler 102 nach einem vorgegebenen Zählerstand ein Ausgangssignal an das Latch 107 abgibt, welches die Stromversorgung über den Schalter 106 um einen vorgegebenen Zeitraum nach dem Erscheinen des "High"-Signals am Ausgang "0" des Latches 101 in den Zustand "1" setzt.

Damit wird die Stromversorgung um einen vorgegebenen Zeitraum nach der Unterbrechung der Pufferschaltung 105 abgeschaltet, so daß ein instabiler Zustand infolge mangelnder Spannungsversorgung beim Abschalten des Puffers 105 vermieden wird. Da mit den Ausgängen des Latches 101 jeweils invertierende Rücksetz-Eingänge des jeweils zugeordneten Latches 104 bzw. 107 verbunden sind, und parallel dazu der jeweilige Zähler 102 bzw. 108 über einen invertierenden clear-Eingang zurückgesetzt wird, ist sichergestellt, daß unmittelbar nach jedem Umschaltvorgang des Latches 101 beide Latches 104 bzw. 107 zurückgesetzt sind und nach Ablauf des betreffenden Verzögerungszeitraumes erst das zu dem aktivierten Zähler gehörende Latch 104 bzw. 107 gesetzt wird. Die entsprechenden Signale der Ausgänge der Latches 104 bzw. 108 und das Eingangssignal für das Latch 101 sind in Figur 11 zusätzlich dargestellt und mit a) bis c) gekennzeichnet.

Es ist ersichtlich, daß das Signal b) als Einschaltzeit der Stromversorgung das Signal c) als Einschaltzeit des Puffers 105 in jedem Fall zeitlich überlappt.

Bei einer anderen bevorzugten Ausführungsform läßt sich das mechanische, das Eingangssignal für das Latch 101 abgebende zweite Verriegelungselement erst dann in eine die Box freigebende Stellung bewegen, wenn der Datenverkehr zwischen Box und System beendet ist. Bei dieser - nicht dargestellten - Variante wird also von einem den Datenverkehr kennzeichnenden Signal die mechanische Bewegbarkeit über einen elektromagnetisch angetriebenen Riegel solange gesperrt, wie der Datenverkehr andauert.

In Figur 11 ist weiterhin gegebenenfalls noch eine wiederaufladbare Pufferbatterie 109 vorgesehen, welche bei aus dem Kasten entfernter Box die (+5 Volt-)Spannungsversorgung der darin befindlichen RAM-Speicher sicherstellt. Die Aufladung der Pufferbatterie erfolgt bei in den Erweiterungskasten eingesetzter Box aus der +15 Volt-Versorgung über einen entsprechenden Widerstand 110.

6

Weitere vorteilhafte (in der Zeichnung nicht dargestellte) Weiterbildungen bestehen in einem zusätzlichen Erweiterungskasten zur Aufnahme bevorzugt mehrerer Boxen, der ein separates Gehäuse aufweist. Er läßt sich außerhalb eines PC betreiben und stellt eine externe Ergänzung dar, um auch mehrere Erweiterungsboxen mit einem PC zu betreiben, der nur einen verfügbaren Floppyschacht aufweist. Mit einem eigenen Netzteil versehen läßt er sich vom PC trennen und beansprucht dessen Stromversorgung nicht. Diese Ausgestaltung ist insbesondere zur Verwendung mit Laptops geeignet. Die Verbindung zu einem PC läßt sich hierbei bevorzugt durch einen Stecker herstellen, der als Box ausgebildet ist an deren Frontfläche der gesamte Bus wiederum als Kabel- oder Steckanschluß verfügbar ist.

Eine weitere (in der Zeichnung nicht dargestellte) Ausführung besteht in einem Adapter zwischen Boxen und Erweiterungskästen, die für unterschiedliche Diskettengrößen ausgelegt sind. Ein Adapter bildet dabei eine Box zum Einbau in den Schacht einer größeren Diskettenstation, welche ihrerseits zur Aufnahme einer Box geeignet ist, die sonst für Kästen vorgesehen ist, die in Schächte für kleinere Diskettenstationen passen.

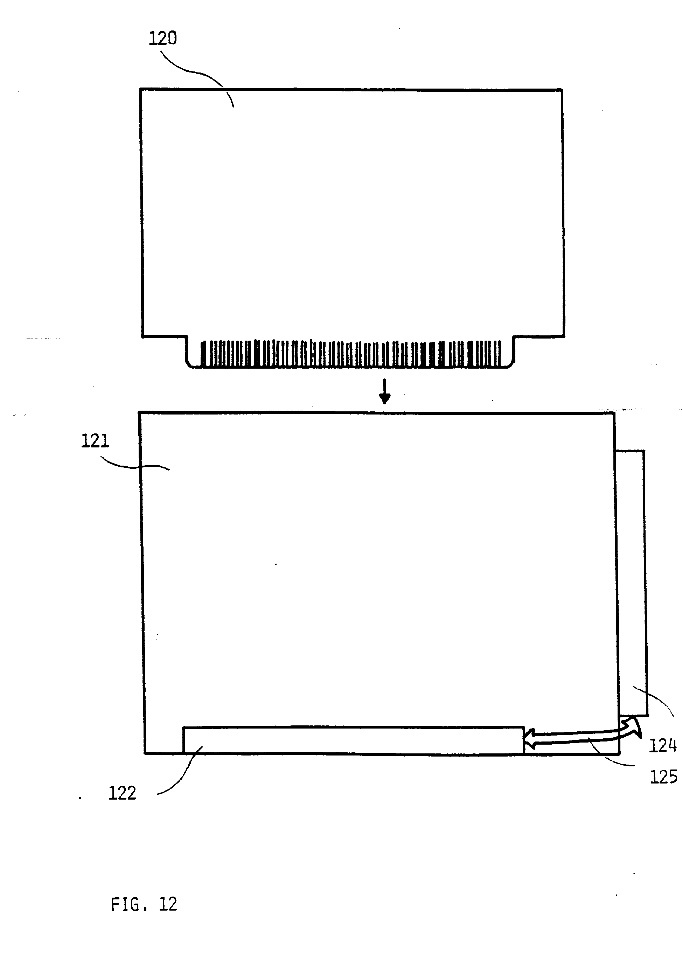

Die Figur 12 zeigt eine übliche PC-Erweiterungskarte 120 in Relation zu einer Erweiterungsbox 121. Eine oder mehrere Erweiterungskarten 120 sind im Gegensatz zu der Darstellung der Figur 4 nicht von vorn sondern seitlich in die Erweiterungsbox 121 einschiebbar und über eine Standard-PC-Bus-Steckdose 122 innerhalb der Erweiterungsbox 121 anschließbar. Diese innere Standard-PC-Bus-Steckdose 122 ist mit der für den Anschluß der Erweiterungsbox 121 an den Einbaukasten 123 vorgesehenen äußeren PC-Bus-Kontaktsteckdose 124 durch ein entsprechendes Kabel 125 verbunden.

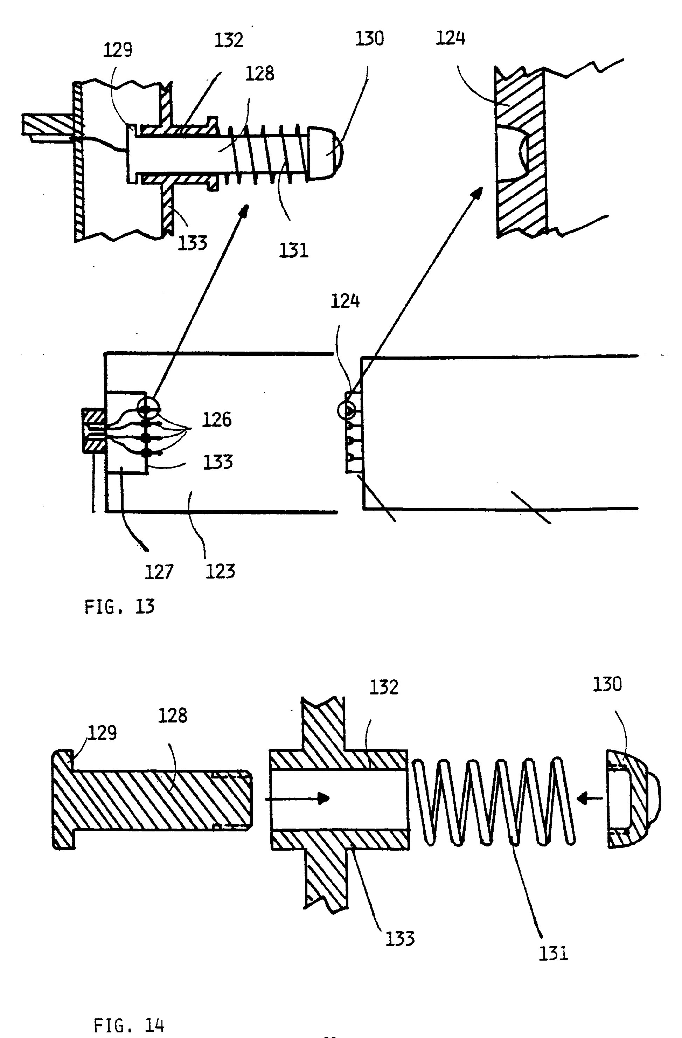

Gemäß Figur 13 sind die Kontaktbolzen 126 des innerhalb des Einbaukastens 123 befindlichen PC-Bus-Kontaktsteckers 127 federgelagert und dadurch nachgiebig während des Einrastens der PC-Erweiterungsbox 121 und gleichzeitig besonders fest kontaktierend. Die Kontaktbolzen 126 bestehen im wesentlichen aus einem Grundkörper 128 mit einem rückwärtigen beschlag 129, einer an der Spitze angeschraubten Kontaktkappe 130 und einer umgebenden Schraubenfeder 131. Die Feder 131 stützt sich einerseits an der Kappe 130 und andererseits an dem mit Gleitbahnen 132 für die Kontaktbolzen 126 versehenen Gehäuse 133 des PC-Bus-Kontaktsteckers 127 ab.

In der Figur 14 sind noch einmal die Bauteile des Kontaktbolzens in einer Montagezeichnung dargestellt.

Die Erfindung bietet damit ein neues, flexibles und einfaches Verfahren zur Funktionserweiterung auf Personal Computer. Die Erweiterungskarte wird in einer verschlossenen Box eingebaut. Die Box kann genau wie eine Diskette im PC eingelegt und herausgenommen werden. Flexiblere Kombination von Hardware und Software ist möglich.

Die Erfindung unterstützt direkt den Begriff "Virtual Instrumentation". Ein "Instrument" kann durch spezifische Hardware in einer Funktionserweiterungsbox eingebaut werden. Verschiedene "Instrumente" lassen sich sehr häufig und einfach wechselnd benutzen. Nötige Kabel und Schaltungen können nach Wunsch auf Frontpaneel der Box vorgesehen werden. Es ist möglich, mehr als eine Erweiterungskarte in einer Box einzubauen.

Mit der Funktionserweiterungsbox kann Software mit Unterstützung von Hardware oder vice versa entwickelt werden; deshalb wird Software besser geschützt. Die verschlossenen Funktionserweiterungsboxen sind vorteilhaft für Wartung und Transport.

**Patentansprüche**

1. Funktionerweiterungseinrichtung für einen PC oder einen entsprechenden Computer, **dadurch gekennzeichnet,** daß die Erweiterungseinheit als Einschubbox (8) in einen Einbaukasten (9) ausgebildet ist, dessen Außenmaße dem einer Standard-Floppy-Disk-Einheit entsprechen, daß der Einbaukasten verbindung zum vollständigen System-Bus hat und daß eine Kontakteinheit (10, 10a) vorgesehen ist, welche eine lösbare elektrische verbindung zwischen Einschubbox und Einbaukasten bildet.

2. Funktionerweiterungseinrichtung nach Anspruch 1, **dadurch gekennzeichnet** , daß es sich bei der Standard°Floppy-Disk-Einheit um eine $5\frac{1}{4}''$- oder $3\frac{1}{2}''$-Einheit handelt.

3. Funktionerweiterungseinrichtung nach einem der vorangehenden Ansprüche, **dadurch gekennzeichnet,** daß der Einbaukasten seitliche Schraublöcher (17, 18) zur Befestigung aufweist.

4. Funktionerweiterungseinrichtung nach einem der vorangehenden Ansprüche, **dadurch gekennzeichnet,** daß die Funktionserweiterung als geschlossene Box (8) ausgebildet ist, welche in einen Schacht des Einbaukastens einsetzbar ist, der Führungen (12, 14) für die Box aufweist.

5. Funktionerweiterungseinrichtung nach einem der vorangehenden Ansprüche, **dadurch gekennzeichnet,** daß die Frontfläche der Box eine Druckfläche zum Auslösen einer Rastvorrichtung (21 bis 23) aufweist, welche die Box bei Druck auf die Frontfläche abwechselnd arretiert und freigibt.

6. Funktionerweiterungseinrichtung nach einem der vorangehenden Ansprüche, **dadurch gekennzeich-**

**net**, daß an der Frontfläche des Einbaukastens in einem Bereich (27), der nicht von der Frontfläche der Box eingenommen ist, ein Betätigungselement für, insbesondere zusätzliche, Arretierungsmittel vorgesehen ist, welche insbesondere mittels mindestens einen schwenkaren Hebels, die Bewegung der Box in Einschubrichtung und/oder entgegengesetzt dazu arretieren.

7. Funktionerweiterungseinrichtung nach einem der vorangehenden Ansprüche, **dadurch gekennzeichnet**, daß zur verbindung zwischen Einbaukasten und PC eine Einsteckkarte oder ein Adapterstecker vorgesehen ist.

8. Funktionerweiterungseinrichtung nach einem der vorangehenden Ansprüche, **dadurch gekennzeichnet**, daß an der Frontfläche der Box mindestens ein Display, Steckverbinder, Schalter und/oder ein Kabelausgang vorgesehen ist.

9. Funktionerweiterungseinrichtung nach einem der vorangehenden Ansprüche, **dadurch gekennzeichnet**, daß die Box einen Schacht zur Aufnahme einer Box enthält, die die Außenmaße einer kleineren Standard-Floppy-Disk-Einheit aufweist als es den Außenmaßen des Einbaukastens der somit einen Adapter bildenden Box entspricht.

10. Funktionerweiterungseinrichtung nach einem der vorangehenden Ansprüche, **dadurch gekennzeichnet**, daß Schaltmittel (105) vorgesehen sind, welche die Bus-Leitungen mit Ausnahme der Leitungen für die Stromversorgung um einen vorgegebenen Zeitraum nach Einschaltung der Stromversorungsleitungen durchschalten und/oder die Stromversorgungsleitungen um einen vorgegebenen Zeitraum nach Auftrennung der übrigen Bus-Leitungen unterbrechen.

11. Funktionerweiterungseinrichtung nach den Ansprüchen 6 und 10, **dadurch gekennzeichnet**, daß die Schaltmittel durch die, insbesondere zusätzlichen, Entriegelungsmittel (S2) aktiviert werden.

12. Funktionerweiterungseinrichtung nach Anspruch 10, **dadurch gekennzeichnet**, daß die Auftrennung der übrigen Bus-Leitungen mittels einer logischen UND-verknüpfung von einem Signal abhängig ist, welches abgegeben wird, wenn im übrigen keine Datenübertragung zwischen Box und Einbaukasten stattfindet.

13. Funktionerweiterungseinrichtung nach einem der vorangehenden Ansprüche, **dadurch gekennzeichnet**, daß die elektrische verbindung zwischen der Box (121) und dem Einbaukasten (123) aus einer an der Stirnseite der Box (121) befindlichen PC-Bus-Kontaktsteckdose (124) und einem innerhalb des Einbaukastens (123) befindlichen PC-Bus-Kontaktstecker (127) besteht, wobei die Anordnung derart getroffen ist, daß die Verbindung durch das Einschieben der Box (121) in den Einbaukasten (123) herstellbar ist.

14. Funktionerweiterungseinrichtung nach Anspruch 13, **dadurch gekennzeichnet**, daß die Kontaktbolzen (126) des PC-Bus-Kontaktsteckers (127) federgelagert sind.

15. Funktionerweiterungseinrichtung nach Anspruch 14, **dadurch gekennzeichnet**, daß die Kontaktbolzen (126) jeweils einen Grundkörper (128) mit rückwärtigem Anschlag (129) und auf der Kontaktspitze aufgeschraubter Kappe (130) sowie eine den Grundkörper (128) umgebende Schraubenfeder (131) aufweisen, wobei die Feder (131) zwischen der Kappe (130) und einer von dem Gehäuse (133) des PC-Bus-Kontaktsteckers (127) gebildeten Führung (132) eingespannt ist.

**Claims**

1. A functional expansion device for a PC or similar computer,
characterised in that
the expansion unit is formed as an insert box (8) in a built-in housing (9) the outer dimension of which corresponds to that of a standard floppy disk unit, in that the built-in housing has a connection to the complete system bus and that a contact unit (10, 10a) is provided which establishes a detachable electrical connection between the insert box and the built-in housing.

2. A functional expansion device according to claim 1, characterised in that the standard floppy disk unit referred to is a $5\frac{1}{4}$ inch or $3\frac{1}{2}$ inch unit.

3. A functional expansion device according to one of the preceding claims, characterised in that the built-in housing has lateral screw holes (17, 18) for securing it.

4. A functional expansion device according to one of the preceding claims, characterised in that the functional expansion is formed as a closed box (8), which can be inserted in a recess of the built-in housing having guides (12, 14) for the box. ,

5. A functional expansion device according to one of the preceding claims, characterised in that the front face of the box has a pressure surface for releasing an engagement device (21 to 23) which alternately locks and releases the box when pressure is applied to the front face.

6. A functional expansion device according to one of the preceding claims, characterised in that on the front face of the built-in housing, in an area (27) which is not occupied by the front face of the box, an actuating element is provided for, particularly additional, locking means which arrest the movement of the box in the direction of insertion and/or in the opposite direction, more particularly by means of at least one pivotable lever.

7. A functional expansion device according to one of the preceding claims, characterised in that an insertable card or an adaptor plug is provided to establish the connection between the built-in housing and the PC.

8. A functional expansion device according to one of the preceding claims, characterised in that at least one display, plug connector, switch and/or cable output is provided on the front face of the box.

9. A functional expansion device according to one of the preceding claims, characterised in that the box contains a recess for receiving a box which has the outer dimension of a smaller standard floppy disk unit than that which corresponds to the outer dimension of the built-in housing of the box which thus forms an adaptor.

10. A functional expansion device according to one of the preceding claims, characterised in that circuit means (105) are provided, which connect-through the bus wires, with the exception of the wires for the current supply at a given interval after the current supply wires have been connected and/or interrupt the current supply wires at a given interval after the separation of the other bus wires.

11. A functional expansion device according to claims 6 and 10, characterised in that the circuit means are activated by the, particularly additional, release means (S2).

12. A functional expansion device according to claim 10, characterised in that the separation of the other bus wires by means of a logical AND connection is dependent on a signal which is emitted when there is no other data transmission occurring between the box and the built-in housing.

13. Functional expansion device according to one of the preceding claims, characterised in that the electrical connection between the box (121) and the built-in housing (123) consists of a PC bus connector socket (124) located on the leading face of the box (121) and a PC-bus connector plug (127) located inside the built-in housing (123), the arrangement being such that the connection can be established by the insertion of the box (121) into the built-in housing (123).

14. A functional expansion device according to claim 13, characterised in that the contact pins (126) of the PC-bus connector plug (127) are spring-mounted.

15. A functional expansion device according to claim 14, characterised in that the contact pins (126) each have a base member (128) with a rearward stop member (129) and a cap (130) screwed onto the contact tip and a helical spring (131) surrounding the base member (128), the spring (131) being clamped between the cap (130) and a guide (132) formed by the housing (133) of the PC-bus connector plug (127).

## Revendications

1. Dispositif d'extension fonctionnelle pour un ordinateur personnel (PC) ou un ordinateur correspondant, caractérisé par le fait que
l'unité d'extension est réalisée sous la forme d'une cartouche (8) insérable dans un boîtier d'insertion (9) dont les dimensions extérieures correspondent à une unité pour disquette dite "Floppy Disk" standard, par le fait que le boîtier d'insertion est relié au bus complet du système, et par le fait qu'il est prévu une unité de contact (10, 10a) qui constitue une liaison électrique amovible entre cartouche et boîtier d'insertion.

2. Dispositif d'extension fonctionnelle selon revendication 1, caractérisé par le fait, que dans le cas de l'unité "Floppy Disk" standard, il s'agit d'une unité 5 1/4″ ou 3 1/2″.

3. Dispositif d'extension fonctionnelle selon l'une des revendications précédentes, caractérisé par le fait que le boîtier d'insertion présente des trous de vissage latéraux (17, 18) pour la fixation.

4. Dispositif d'extension fonctionnelle selon l'une des revendications précédentes, caractérisé par le fait que l'extension fonctionnelle est réalisée sous la forme d'une boîte ou cartouche fermée (8) pouvant être insérée dans un couloir du boîtier d'insertion, lequel présente des guides (12, 14) pour la cartouche.

5. Dispositif d'extension fonctionnelle selon l'une des revendications précédentes, caractérisé par le fait que la surface frontale de la cartouche présente une surface de poussée pour le déclenchement d'un dispositif de verrouillage (21 à 23) qui, en cas de poussée sur la surface frontale, réalise tour à tour l'arrêt et la libération de la cartouche.

6. Dispositif d'extension fonctionnelle selon l'une des revendications précédentes, caractérisé par le fait qu'il est prévu, sur la surface frontale du boîtier d'insertion, dans une région (27) qui n'est pas occupée par la surface frontale de la cartouche, un élément d'actionnement pour des moyens d'arrêt, notamment supplémentaires, qui, notamment au moyen d'au moins un levier pivotant, arrêtent le mouvement de la cartouche dans le sens de l'introduction et/ou dans le sens opposé.

7. Dispositif d'extension fonctionnelle selon l'une des revendications précédentes, caractérisé par le fait qu'une carte d'enfichage ou un connecteur-adaptateur est prévue pour la connexion entre boîtier d'insertion et ordinateur personnel (PC).

8. Dispositif d'extension fonctionnelle selon l'une des revendications précédentes, caractérisé par le fait qu'il est prévu sur la surface frontale de la cartouche au moins un organe d'affichage, connecteur, commutateur et/ou une sortie de câble.

9. Dispositif d'extension fonctionnelle selon l'une des revendications précédentes, caractérisé par le fait que la cartouche contient un couloir pour recevoir une cartouche ou boîte présentant les dimensions extérieures d'une unité "Floppy Disk" standard plus petite que ce qui correspond aux dimensions extérieures du boîtier d'insertion de la cartouche constituant ainsi un adaptateur.

10. Dispositif d'extension fonctionnelle selon l'une des revendications précédentes, caractérisé par le fait qu'il est prévu des moyens actifs (105) qui, à l'exception des lignes pour l'alimentation de courant, connectent les lignes de bus un certain laps de temps après la mise en circuit des lignes d'alimentation de courant et/ou coupent les lignes d'alimentation de courant un certain laps de temps prédéterminé après la coupure des autres lignes de bus.

11. Dispositif d'extension fonctionnelle selon les revendications 6 et 10, caractérisé par le fait que les moyens actifs sont activés par les moyens notamment supplémentaires de déverrouillage (S2).

12. Dispositif d'extension fonctionnelle selon revendication 10, caractérisé par le fait que la coupure des autres lignes de bus est dépendante, au moyen d'une combinaison logique ET, d'un signal qui est émis s'il n'y a par ailleurs aucune transmission de donnée entre cartouche et boîtier d'insertion.

13. Dispositif d'extension fonctionnelle selon l'une des revendications précédentes, caractérisé par le fait que la liaison électrique entre la cartouche (121) et le boîtier d'insertion (123) est constituée par un connecteur femelle de bus de PC (124) se trouvant sur la face frontale de la cartouche (121) et par un connecteur mâle de bus de PC (127) se trouvant à l'intérieur du boîtier d'insertion (123), l'agencement étant tel que la liaison soit établie par l'insertion de la cartouche (121) dans le boîtier d'insertion (123).

14. Dispositif d'extension fonctionnelle selon revendication 13, caractérisé par le fait que les doigts de contact (126) du connecteur mâle de bus de PC (127) ont un montage à ressort.

15. Dispositif d'extension fonctionnelle selon revendication 14, caractérisé par le fait que les doigts de contact (126) présentent chacun un corps de base (128) avec une butée arrière (129) et une coiffe (130) vissée sur la pointe de contact, ainsi qu'un ressort hélicoïdal (131) entourant le corps de base (128), ce ressort (131) étant pris entre ladite coiffe (130) et un guide (132) formé par l'enveloppe (133) du connecteur mâle (127) de bus de PC.

Fig. 3a

Fig. 3c

Fig.3b

Fig. 2

Fig. 1

Fig. 4a

Fig. 4

EP 0 417 163 B1

Fig. 5b

Fig.5a

Fig. 5c

Fig.5d

EP 0 417 163 B1

Fig. 6b

Fig. 6a

Fig. 6c

Fig. 7a

8    9    20    29

Fig. 7b

Fig. 7c

Fig. 7d

Fig. 7e

Fig.8

Fig.9

Fig.10a

Fig.10b

Fig. 11

120

121

122

124

125

FIG. 12

FIG. 13

FIG. 14

20